Europäisches Patentamt

European Patent Office

Office européen des brevets

(11) Veröffentlichungsnummer: **0 452 688 A1**

## (12) EUROPÄISCHE PATENTANMELDUNG

(21) Anmeldenummer: **91104320.6**

(22) Anmeldetag: **20.03.91**

(51) Int. Cl.⁵: **H01R 13/66**

(30) Priorität: **22.03.90 DE 4009273**

(43) Veröffentlichungstag der Anmeldung:
**23.10.91 Patentblatt 91/43**

(84) Benannte Vertragsstaaten:
**AT DE FR GB IT**

(71) Anmelder: **Bosch-Siemens Hausgeräte GmbH
Patent- und Vertragswesen
Hochstrasse 17 Postfach 10 02 50
W-8000 München 80(DE)**

(72) Erfinder: **Striek, Ralf-Jürgen, Dipl.-Ing.
Mäckeritzstrasse 22
W-1000 Berlin 13(DE)**

(54) Verbindungsstück für eine elektrisch und optisch leitende Steckverbindung.

(57) Verbindungsstück für eine elektrisch leitende Steckverbindung mit einem entsprechend ausgebildeten Verbindungsstück; an der Stirnseite (3) ist mindestens ein Anschluß (11, 13) für eine Lichtwellenleiterverbindung vorgesehen, der innerhalb des Gehäuses (1) mit einem aus diesem geführten Lichtwellenleiter (19, 21 verbunden ist.

Fig. 1

Die Erfindung betrifft ein Verbindungsstück für eine elektrisch leitende Steckverbindung nach dem Oberbegriff des Anspruches 1.

Derartige Verbindungsstücke sind allgemein bekannt und dienen in vielfältiger Weise, beispielsweise dem Netzanschluß elektrischer Geräte, wie elektrischer Kleingeräte einschließlich von Geräten für den audio-visuellen Bereich und von elektrischen Hausgeräten. Mit Kontaktstiften versehene Verbindungsstücke können beispielsweise als Stecker mit als Steckdosen ausgebildeten Verbindungsstücken wirkverbunden werden.

Über mit netzseitigen Leitern verbundene Verbindungsstücke oder Verbindungsgegenstücke ist eine Energieversorgung zum Betrieb elektrischer Geräte möglich; Verbindungsstücke und/oder Verbindungsgegenstücke können auch getrennt von einem Netz an Verlängerungskabeln oder geräteseitig ausgebildet sein.

Die steigende Anzahl von beispielsweise in Haushalten eingesetzten elektrischen Geräten macht es in zuehmendem Maße notwendig, daß mehrere derartiger Geräte in koordinierter Weise eingesetzt werden, und daß Informationen betreffend Betriebszustände oder Störungen weitergegeben oder empfangen werden.

Die Gründe hierfür können vielfältiger Art sein. So kann es beispielsweise zur Lärmminderung und um eine Überlastung des Netzes zu vermeiden geboten sein, daß große Haushaltsgeräte, wie Waschmaschinen, Wäschetrockner und Geschirrspüler nicht gleichzeitig oder sich zumindest nur während bestimmter Programmabschnitte überschneidend betrieben werden. Für wasserverbrauchende Geräte kann es beispielsweise erforderlich sein, daß während Programmabschnitten, in denen ein Wasserzulauf erfolgt, jeweils nur ein Gerät betrieben wird, um das Wasserleitungsnetz nicht zu überlasten.

Eine Koordination des Einsatzes einer Vielzahl von Geräten erfolgt entweder manuell durch eine Bedienungsperson, was zeitaufwendig und fehleranfällig ist, oder durch Zeitschaltuhren, über die der zeitliche Ablauf des Betriebs einzelner Geräte steuerbar ist.

Die letzgenannte Vorgehensweise erlaubt nur eine relativ grobe Koordination; ein simultaner Betrieb einzelner Geräte während bestimmter Programmabschnitte ist damit ebenso wenig möglich wie eine Koordinierung anhand anderer als den zeitlichen Ablauf betreffender Parameter.

Für eine Datenübertragung zwischen und zu netzabhängigen Geräten ist es bekannt, auf Netzleitungen und entsprechende geräteseitige Anschlußleitungen Daten aufzumodulieren.

Diese Vorgehensweise ist zum einen relativ aufwendig und zum anderen aufgrund der Übertragungsrate von bis zu 10 kbit/s für die schnelle Übertragung größerer Datenmengen nur bedingt geeignet. Nachteilig ist dabei auch die relativ hohe Störanfälligkeit durch Netzrauschen oder dgl.

Der Erfindung liegt die Aufgabe zugrunde, ein Verbindungsstück der genannten Art so weiterzubilden, daß in einfacher Weise ein Anschluß für eine Datenübertragung zwischen einzelnen, netzabhängigen elektrischen Geräten geschaffen wird, damit beispielsweise eine zentrale Steuerung und Überwachung, ein Datenaustausch und ein koordinierter Einsatz dieser Geräte ermöglicht wird.

Diese Aufgabe ist bei einem bekannten Verbindungsstück erfindungsgemäß dadurch gelöst, daß in der Stirnseite mindestens ein Anschluß für eine Lichtwellenleiter-Verbindung vorgesehen ist, der innerhalb des Gehäuses mit einem aus diesem geführten Lichtwellenleiter verbunden ist.

Mit dem erfindungsgemäßen Verbindungsstück erfolgt somit beim Herstellen einer Steckverbindung, zum Anschluß eines elektrischen Gerätes an ein elektrisches Versorgungsnetz, gleichzeitig und ohne weiteres Zutun ein Anschluß von Lichtwellenleitern. Über derartige, erfindungsgemäß einfach und ohne den Einsatz zusätzlicher Bauteile zu verbindende Lichtwellenleiter ist eine Datenübertragung mit einer Übertragungsrate von bis zu 5 Megabit/s im wesentlichen störungsfrei möglich. Auf einfache Weise ist somit die Voraussetzung dafür geschaffen, daß Steuer- und Informationssignale zwischen einzelnen Geräten und jeweils zwischen einem Steuergerät, wie beispielsweise einem Computer und einem oder mehreren Geräten übertragen werden können.

Die erfindungsgemäße Kopplung elektrischer Anschlüsse und solcher für Lichtwellenleiter führt weiterhin in vorteilhafter Weise dazu, daß eine mechanische Verbindung der Verbindungsstücke allein über den elektrischen Anschluß bewirkt werden kann. Die Anschlüsse für Lichtwellenleiter müssen somit nicht so ausgelegt werden, daß sie einer größeren mechanischen Beanspruchung ohne Funktionseinbuße widerstehen können.

Bei einer bevorzugten Ausführungsform sind zwei Anschlüsse für voneinander getrennte Lichtwellenleiter-Verbindungen vorgesehen. Damit ist in einfacher Weise die Voraussetzung für den Anschluß mehrerer Lichtwellenleiter und damit mehrerer Datenleitungen geschaffen. Durch Herstellen einer Steckverbindung kann somit gleichzeitig eine Verbindung beispielsweise für eine Datenleitung zu einem Steuergerät und eine zu weiteren Geräten oder für eine Datenleitung zum Empfang und eine zur Abgabe von Daten hergestellt werden.

Es hat sich dabei als vorteilhaft erwiesen, daß die beiden Anschlüsse mit gegenseitigem Abstand entlang der Mittellinie zwischen zwei Kontaktstifen oder zwei Kontaktaufnahmen angeordnet sind.

Bei einer weiteren bevorzugten Ausführungsform sind die aus dem Gehäuse geführten elektrischen Leiter und Lichtwellenleiter zu einem Kabelstrang vereinigt. Damit sind Datenleitungen in raumsparender Weise mit Netzanschlußleitungen gekoppelt. Auf diese Art können neben geräteseitigen Anschlußkabeln beispielsweise auch Verlängerungskabel zur gleichzeitigen Übertragung von elektrischer Energie und von Daten ausgelegt sein.

Ein Ausführungsbeispiel betreffend ein erfindungsgemäßes Verbindungsstück, ist nachfolgend anhand der Zeichnung erläutert. Es zeigen jeweils in vereinfachter, schematischer Darstellung:

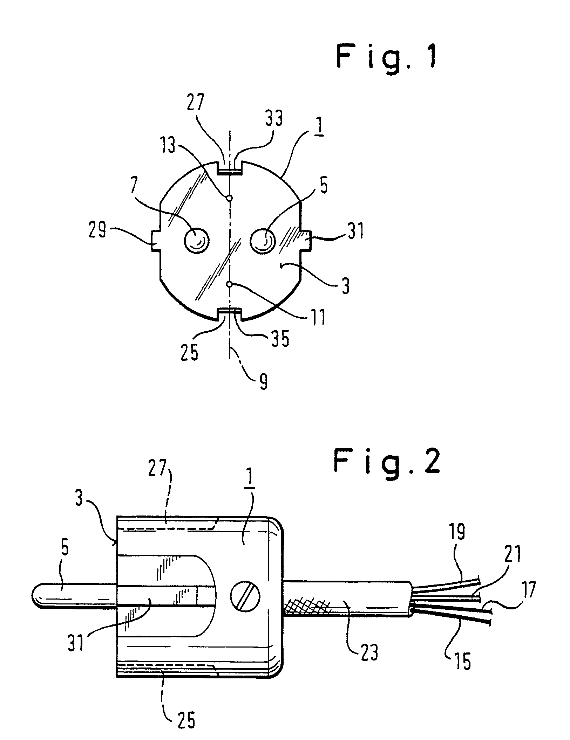

Fig. 1    eine Vorderansicht eines steckerförmig ausgebildeten Verbindungsstükkes und

Fig. 2    eine Seitenansicht des Verbindungsstückes nach Figur 1.

Das steckerförmig ausgebildete Verbindungsstück weist ein, beispielsweise aus einem elektrisch isolierenden Kunststoff hergestelltes Gehäuse 1 auf. Dieses besteht in nicht dargestellter Weise aus zwei im wesentlichen gleich ausgebildeten Hälften, die miteinander verschraubt sind. Gegenüber einer Stirnseite 3 des Gehäuses 1 verlaufen im wesentlichen in Längsrichtung des Gehäuses 1 zwei im Abstand voneinander angeordnete Kontaktstifte 5, 7. Die Kontaktstifte 5, 7 dienen in üblicher Weise zur Aufnahme von Kontaktaufnahmen eines nicht dargestellten und im vorliegenden Fall steckdosenförmig ausgebildeten Verbindungsstückes.

Die Erfindung betrifft somit sowohl steckerförmig als auch steckdosenförmig ausgebildete Verbindungsstücke, die jeweils mit einem entsprechenden Gegenstück eine elektrisch leitende Steckverbindung bilden können.

Mit Abstand voneinander benachbart sind entlang der Mittellinie 9 zwischen den Kontaktstiften 5, 7 vorwiegend aufnahmeförmige Bereiche aufweisende Anschlüsse 11, 13 für Lichtwellenleiter-Verbindungen angeordnet. Die Anschlüsse 11, 13 für Lichtwellenleiter-Verbindungen können aber auch durch nicht dargestellte, aus dem Gehäuse 1 bzw. der Stirnfläche 3 des Gehäuses ragende Anschlußbereiche gebildet werden.

Anstelle derartiger Anschlußbereiche für eine Lichtwellenleiter-Verbindung können in der Ebene der Stirnfläche 3 auch entsprechend ausgebildete Lichtaustritts-, bzw. Lichteintrittsflächen für Lichtwellenleiter vorgesehen werden.

Innerhalb des Gehäuses 1 sind die Kontaktstifte 5, 7 in nicht dargestellter, bekannter Weise mit elektrischen Leitern 15, 17 verbunden, und es sind in ebenfalls nicht dargestellter Weise, die Anschlüsse 11, 13 für eine Lichtwellenleiter-Verbindung innerhalb des Gehäuses 1 mit Lichtwellenleitern 19, 21 verbunden. Dabei sind die elektrischen Leiter 15, 17 wie auch die Lichtwellenleiter 19, 21 zu einem einzigen Kabelstrang 23 vereinigt, der an einer der Stirnseite 3 gegenüberliegenden Rückseite des Gehäuses 1 aus diesem herausgeführt ist.

Mit dem erfindungsgemäßen Verbindungsstück wird somit in einfacher Weise bei der Herstellung eines elektrischen Anschlusses mit einem Verbindungsgegenstück gleichzeitig über die Anschlüsse 11, 13 für eine Lichtwellenleiter-Verbindung ein Anschluß zwischen Lichtwellenleitern zur Herstellung einer Datenleitung bewirkt.

Da eine Steckverbindung zwischen dem Verbindungsstück und einem entsprechend ausgebildeten Verbindungsgegenstück über die Kontaktstifte 5, 7 und mit diesen zusammenwirkenden Kontaktaufnahmen gehalten wird, sind die Anschlüsse 11, 13 für eine Lichtwellenleiter-Verbindung im wesentlichen frei von mechanischer Beanspruchung.

Da die Lichtwellenleiter 19, 21 sowie die für deren Verbindung vorgesehenen Anschlüsse 11, 13 nicht elektrisch leitend sind, können sie in engem Abstand zueinander, wie auch zu den elektrisch leitenden Kontaktstiften 5, 7 sowie zu elektrisch leitenden Kontaktaufnahmen und zu elektrischen Leitern 15, 17 angeordnet werden.

Das Gehäuse 1 des steckerförmig ausgebildeten Verbindungsstücks kann beispielsweise dem Gehäuse eines Euronorm-Netzsteckers entsprechen, das mit einer Euronorm-Steckdose kuppelbar ist. In diesem Gehäuse 1 sind ferner zwei einander gegenüberliegende Aufnahmen 25, 27, beispielsweise für einen Schutzleiteranschluß 33, 35 vorgesehen. Ferner sind an einander gegenüberliegenden, abgeflachten Bereichen des im wesentlichen zylinderförmig ausgebildeten Gehäuses 1 Vorsprünge 29, 31 vorgesehen, die eine Lageorientierung gegenüber einem zugeordneten Verbindungsgegenstück und das Herstellen einer Steckverbindung erleichtern sollen. Gegebenenfalls kann betreffend das erfindungsgemäße Verbindungsstück durch Weglassen eines der Vorsprünge 29, 31 eine eindeutige Lageorientierung hinsichtlich der Anschlüsse 11, 13 gegenüber an einem Verbindungsgegenstück entsprechend ausgebildeten Anschlüssen geschaffen werden.

## Patentansprüche

1.  Verbindungsstück für eine elektrisch leitende Steckverbindung mit einem entsprechend ausgebildeten Verbindungsgegenstüsck, mit einem Gehäuse, elektrisch leitenden Kontaktstiften, die aus einer Stirnseite des Gehäuses ragen oder elektrisch leitenden Kontaktaufnahmen mit einer Öffnung gegenüber der Stirnseite, die jeweils innerhalb des Gehäuses mit aus diesem geführten elektrischen Leitern verbunden sind, **dadurch gekennzeichnet,** daß in der Stirnseite (3) mindestens ein Anschluß (11, 13) für eine Lichtwellenleiterverbindung vorgesehen ist, der innerhalb des Gehäuses (1) mit einem aus diesem geführten Lichtwellenleiter (19, 21) verbunden ist.

2. Verbindungsstück nach Anspruch 1, dadurch gekennzeichnet, daß zwei Anschlüsse (11, 13) für voneinander getrennte Lichtwellenleiter-Verbindungen vorgesehen sind.

3. Verbindungsstück nach Anspruch 2, dadurch gekennzeichnet, daß die beiden Anschlüsse (11, 13) mit gegenseitigem Abstand entlang der Mittellinie (9) zwischen zwei Kontaktstiften oder zwei Kontaktaufnahmen (5, 7) angeordnet sind.

4. Verbindungsstück nach Anspruch 1 oder 2, dadurch gekennzeichnet, daß die aus dem Gehäuse (1) geführten elektrischen Leiter (15, 17) und Lichtwellenleiter (19, 21) zu einem Kabelstrang (23) vereinigt sind.

# Fig. 1

# Fig. 2

Europäisches
Patentamt

# EUROPÄISCHER
# RECHERCHENBERICHT

Nummer der Anmeldung

## EP 91 10 4320

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | EP-A-0 113 024 (ANT)<br>* Seite 2, Zeilen 1 - 17; Anspruch 1; Figur 1 *<br>– – – | 1,2-4 | H 01 R 13/66 |
| Y | EP-A-0 304 639 (FELLER AG)<br>* das ganze Dokument *<br>– – – | 2-4 | |
| A | EP-A-0 142 970 (AMERICAN TELEPHONE AND TELE-GRAPH COMPANY)<br>* Anspruch 1; Figur 1 *<br>– – – – – | 1-4 | |

| RECHERCHIERTE SACHGEBIETE (Int. Cl.5) |
|---|
| H 01 R |

Der vorliegende Recherchenbericht wurde für alle Patentansprüche erstellt

| Recherchenort | Abschlußdatum der Recherche | Prüfer |
|---|---|---|
| Berlin | 14 Juni 91 | CLOSA D. |